(19) Europäisches Patentamt
European Patent Office
Office européen des brevets

(11) Numéro de publication: **0 347 330**
**A1**

# (12) DEMANDE DE BREVET EUROPEEN

(21) Numéro de dépôt: **89401704.5**

(22) Date de dépôt: **16.06.89**

(51) Int. Cl.4: **H 04 N 7/137**

(30) Priorité: **17.06.88 FR 8808125**

(43) Date de publication de la demande: **20.12.89 Bulletin 89/51**

(84) Etats contractants désignés: **DE GB IT NL**

(71) Demandeur: **THOMSON-CSF**
**51, Esplanade du Général de Gaulle**
**F-92800 Puteaux (FR)**

(72) Inventeur: **Tourtier, Philippe**
**THOMSON-CSF SCPI Cédex 67**
**F-92045 Paris la Défense (FR)**

**Perron, Claude**
**THOMSON-CSF SCPI Cédex 67**
**F-92045 Paris la Défense (FR)**

**Babonneau Jean-Yves**
**THOMSON-CSF SCPI Cédex 67**
**F-92045 Paris la Défense (FR)**

(74) Mandataire: **Lincot, Georges et al**
**THOMSON-CSF SCPI**
**F-92045 PARIS LA DEFENSE CEDEX 67 (FR)**

## (54) Procédé de régulation du remplissage de la mémoire tampon d'un codeur d'images, et dispositif de régulation pour la mise en oeuvre de ce procédé.

(57) L'invention concerne un procédé de régulation du remplissage de la mémoire tampon d'un codeur d'images dans lequel les valeurs numériques représentant les images sont quantifiées selon une échelle de quantification définie par un paramètre de régulation Par (R,n,j) qui est fonction de la valeur de remplissage (R). Le procédé consiste à faire évoluer la valeur du paramètre de régulation sur une famille de graphes (GR1, ..., GR6), chaque graphe comportant un palier horizontal pour toutes les valeurs de remplissage comprises entre 0 et 80% de la capacité de la mémoire tampon, et comportant une partie exponentielle pour les valeurs de remplissage comprises entre 80 et 100%. Un graphe est sélectionné pour la durée de toute une image. La valeur du paramètre se déplace sur ce graphe au cours du codage de cette image. Chaque graphe est défini par sa valeur de palier, et le procédé consiste à choisir une valeur de palier telle que l'image courante, si elle est très semblable à l'image précédente, provoquera un remplissage de la mémoire tampon qui restera compris entre 20% et 80%, ce qui permet de garder le paramètre de régulation absolument constant pendant au moins la durée d'une image entière. Pour une suite d'images quasi-stationnaires, le paramètre de régulation reste à peu près constant. C'est un avantage important, car l'oeil est très sensible au bruit temporel dans les images.

Application au codage des images de télévision.

FIG.1
Par (R,n,j)
Paramètre de Régulation
S1
M
S2
GR1
GR6
PAL1
PAL6
10 20 30 40 50 60 70 80 90 100
R
Remplissage %

EP 0 347 330 A1

## Description

### Procédé de régulation du remplissage de la mémoire tampon d'un codeur d'images, et dispositif de régulation pour la mise en oeuvre de ce procédé

L'invention concerne un procédé de régulation du remplissage de la mémoire tampon d'un codeur d'images et un dispositif de régulation pour la mise en oeuvre de ce procédé. Un codeur d'images comporte classiquement une mémoire tampon placée à la sortie de ce codeur afin de permettre une transmission des données codées, avec un débit constant correspondant au débit d'un canal de transmission, bien que le procédé de codage fournisse une quantité d'informations extrêmement variable en fonction du temps.

Par exemple, un dispositif de codage d'images par transformation cosinus comporte classiquement :
- un dispositif de codage par transformation cosinus qui calcule un bloc de 16x16 coefficients de transformation correspondant à un bloc de 16x16 valeurs de luminance ou de chrominance, chaque image étant découpée en blocs de 16x16 pixels ;
- un dispositif de quantification qui fait correspondre une valeur numérique à chaque valeur de coefficient de transformation, cette opération de quantification étant un changement d'échelle destiné à réduire la quantité d'informations représentant chaque coefficient de transformation, en réduisant le nombre de bits significatifs ;
- un codeur de Huffmann, faisant correspondre un mot de code, de longueur variable, à chaque valeur fournie par le dispositif de quantification, ces mots de code constituant les données codées à transmettre ;
- une mémoire tampon pour stocker les données codées, au rythme où elles sont fournies par le codeur de Huffmann, et pour les restituer, à un rythme correspondant au débit constant d'un canal de transmission relié à la sortie du codeur ;
- un dispositif de régulation du remplissage de la mémoire tampon, commandant le dispositif de quantification en fonction du remplissage de la mémoire tampon pour éviter soit un assèchement, soit un engorgement de la mémoire tampon.

Un procédé classique de régulation du remplissage de la mémoire tampon consiste à modifier le pas de l'échelle de quantification pour chaque bloc de pixels, en fonction du remplissage de la mémoire tampon. Cette échelle de quantification peut être linéaire ou non linéaire. Dans les deux cas, cette échelle est définie par la valeur d'un paramètre, dit paramètre de régulation, qui est fonction du remplissage de la mémoire tampon. Par exemple, le pas de l'échelle de quantification peut être croissant en fonction de la valeur du paramètre.

Une augmentation du pas de l'échelle de quantification provoque une réduction de la quantité d'informations à transmettre, en diminuant le nombre de bits significatifs représentant les coefficients de transformation à transmettre. En particulier, de nombreuses valeurs de coefficients qui sont proches de zéro sont arrondies à la valeur zéro si le pas de quantification est grand. Ces valeurs nulles n'étant pas transmises, une augmentation du pas de quantification a notamment pour conséquence de réduire le nombre des coefficients à transmettre. Au contraire, une réduction du pas de l'échelle de quantification provoque une augmentation de la quantité d'informations à transmettre et augmente la qualité de l'image restituée, en augmentant le nombre de bits significatifs représentant les coefficients à transmettre.

Le calcul de la valeur du paramètre de régulation est réalisé classiquement avec une période correspondant à un bloc de 16x16 pixels, pour que la régulation réagisse rapidement aux fluctuations du remplissage. Pourtant il serait souhaitable de garder la même échelle de quantification pendant au moins une image car, après décodage, l'image restituée paraît plus homogène. En effet, un changement d'échelle de quantification pour des blocs voisins dans une même image fait apparaître des démarcations entre les blocs, dues à une différence sur les erreurs de codage affectant les blocs. Cependant il n'est pas possible d'interdire toute variation au paramètre de régulation durant le codage de toute une image car, dans certains cas, cela conduirait à un engorgement de la mémoire tampon. Pour éviter un assèchement de la mémoire, on connaît un procédé classique consistant à stocker des bits de bourrage.

Le but de l'invention est de permettre une régulation maintenant la même échelle de quantification pendant la durée d'au moins une image, dans la plupart des cas, tout en évitant l'assèchement ou l'engorgement de la mémoire tampon dans les cas exceptionnels. L'objet de l'invention est un procédé consistant à calculer, pour chaque image courante, une valeur du paramètre de régulation, appelée valeur de palier, telle que, s'il garde cette valeur pendant tout le codage de l'image courante, le remplissage restera très probablement dans une zone de valeurs prédéterminées, cette valeur du paramètre étant calculée pour l'image courante, en fonction de la valeur de palier calculée pour l'image précédente et en fonction des écarts hors de la zone des valeurs prédéterminées, effectués par la valeur du remplissage au cours du codage de l'image précédente. La valeur du paramètre est modifiée exceptionnellement au cours du codage d'une image, lorsque la valeur du remplissage sort de la zone des valeurs prédéterminées, pour éviter un assèchement ou un engorgement de la mémoire tampon.

L'invention a aussi pour objet un dispositif de régulation pour la mise en oeuvre de ce procédé.

Selon l'invention, un procédé de régulation du remplissage de la mémoire tampon d'un codeur d'images, les images étant représentées par une suite de valeurs numériques, qui sont quantifiées selon une échelle de quantification, puis sont codées par blocs selon un procédé connu ; consistant à définir l'échelle de quantification par un paramètre dit paramètre de régulation, chaque pas de l'échelle de quantification croissant avec ce paramètre ; à déterminer une valeur de paramètre en fonction du remplissage de la mémoire tampon, au cours du codage de l'image courante ; et à stocker dans la mémoire tampon des bits de bourrage lorsque la valeur du remplissage est inférieure à une première valeur de seuil ;
est caractérisé en ce qu'il consiste, en outre, à :
- déterminer, pour toute la durée de chaque image courante, une valeur, dite valeur de palier, définissant un graphe du paramètre de régulation en fonction du remplissage, ce graphe comportant un palier où le paramètre est égal à la valeur de palier pour toutes les valeurs de remplissage inférieures à une seconde valeur de seuil qui est supérieure à la première valeur de seuil, et comportant une partie où le paramètre est croissant pour les valeurs de remplissage croissant au delà de la seconde valeur de seuil ; cette valeur de palier étant déterminée en fonction de la valeur de palier qui a été calculée pour l'image précédente, et en fonction du coût de codage de chacun des blocs de valeurs représentant l'image précédente ;
- déterminer une valeur du paramètre pour chaque bloc de valeurs représentant l'image courante, telle que cette valeur appartienne au graphe déterminé pour l'image courante, et corresponde à la valeur du remplissage à la fin du codage du bloc immédiatement précédent.

L'invention sera mieux comprise et d'autres détails apparaîtront à l'aide de la description ci-dessous et des figures l'accompagnant :

- la figure 1 représente la famille de graphes des valeurs du paramètre de régulation en fonction du remplissage, dans un exemple de mise en oeuvre du procédé selon l'invention ;
- les figures 2 et 3 représentent des graphes illustrant une première variante de mise en oeuvre du procédé selon l'invention ;
- les figures 4 et 5 représentent des graphes illustrant une seconde variante de mise en oeuvre du procédé selon l'invention ;
- la figure 6 représente le schéma synoptique d'un exemple de réalisation d'un codeur d'images comportant un dispositif de régulation pour la mise en oeuvre du procédé selon l'invention ;
- la figure 7 représente un organigramme de micro-programme utilisé dans cet exemple de réalisation.

Dans ce qui suit, les images considérées sont des images de télévision classique, constituées chacune de deux trames entrelacées. Chaque trame est traitée indépendamment de l'autre, comme si elle était une image à elle seule.

Considérons, par exemple, la mise en oeuvre du procédé selon l'invention dans un codeur d'images où la quantification est réalisée selon une échelle de quantification linéaire choisie parmi une pluralité d'échelles prédéterminées. L'échelle étant linéaire, son pas est uniforme et il est égal à la valeur du paramètre de régulation. La quantification d'une valeur numérique consiste alors à diviser cette valeur par la valeur du paramètre de régulation, puis à arrondir le résultat à la valeur entière la plus proche.

Chaque trame est découpée en blocs de 16x16 pixels, chaque bloc de pixels étant représenté par un bloc de 16x16 coefficients cosinus.

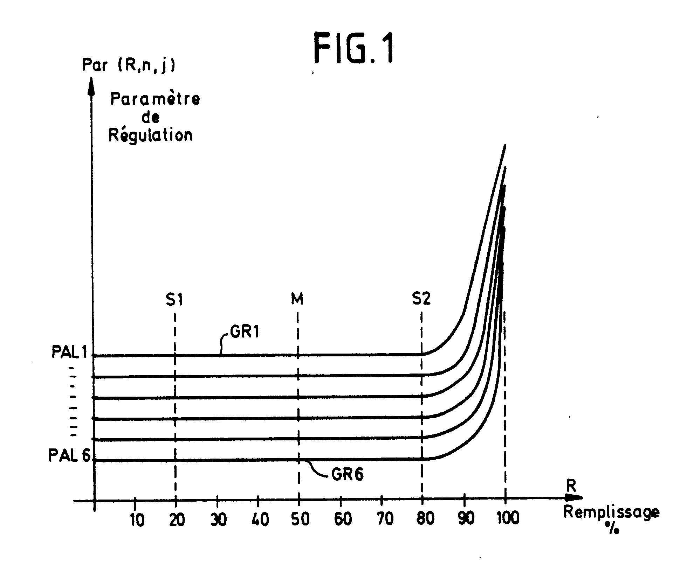

Le paramètre de régulation utilisé pour coder les 16x16 coefficients de transformation d'un bloc est noté Par(R,n,j). Il est fonction à la fois du remplissage R de la mémoire tampon, du n° n de la trame courante, et du n° j du bloc de pixels considéré dans la trame courante. La valeur R est la valeur du remplissage mesurée à la fin du codage du bloc n°(j-1). Le procédé selon l'invention vise à maintenir la valeur du paramètre aussi constante que possible pendant la durée d'au moins une trame. Pour cela, l'ensemble des valeurs du paramètre est répartie sur une famille de graphes GR1, ..., GR6, qui est représentée sur la figure 1. Chacun de ces graphes comporte un palier correspondant à une valeur constante, Pal1, ..., Pal6, pour toutes les valeurs de remplissage inférieures à une valeur S2, fixée par exemple à 80% de la capacité de la mémoire tampon ; et comporte une partie croissante, par exemple exponentielle, pour les valeurs de remplissage entre 80% et 100%.

Dans cet exemple, la famille de graphes ne comporte que six graphes pour simplifier l'explication. En pratique, elle peut comporter une infinité de graphes, chaque valeur de paramètre pouvant être calculée par des formules simples.

Le procédé consiste à garder le même graphe, GR1, ou GR2, ..., ou GR6, pendant toute la durée d'une trame. Le déplacement du point de fonctionnement sur ce graphe réalise une premier boucle de régulation, qui agit au rythme des blocs de 16x16 pixels. Le palier horizontal du graphe correspond à une zone de fonctionnement permettant d'obtenir une qualité uniforme des trames restituées puisqu'il n'y a pas de changement de pas de quantification lorsque R varie. La partie croissante du graphe permet d'éviter un engorgement de la mémoire tampon si la valeur de palier a été choisie trop faible par rapport à la quantité d'informations nécessaire pour coder la trame courante. Ce cas peut se produire lorsque la trame courante nécessite une quantité d'informations sensiblement plus importante que la trame précédente. Si le remplissage descend en dessous d'une valeur de seuil S1, fixée à 20%, un stockage de mots de bourrage, dans la mémoire tampon, est utilisé pour éviter un assèchement de la mémoire. Ce cas peut se produire lorsque la trame courante nécessite une quantité d'informations sensiblement plus faible que celle de la trame précédente.

Dans le cas où la valeur de palier a été choisie convenablement et si les trames successives comportent la même quantité d'informations, le même graphe est conservé pour toute une suite de trames. Le remplissage reste inférieur à 80%, par conséquent la valeur instantanée du paramètre de régulation reste constante pendant la durée du codage de chacune des trames et éventuellement pendant le codage de toute la suite des trames. Il n'y a pas de discontinuité visible entre les blocs à l'intérieur d'une même trame et entre les blocs homologues dans la suite de trames. La qualité des trames restituées est donc uniforme.

Par ailleurs, il est souhaitable que le remplissage de la mémoire tampon ne stagne pas dans la zone de 0 à 20%. Pour éviter un assèchement de la mémoire, il est toujours possible d'utiliser le procédé classique consistant à stocker des bits de bourrage, mais une sous-utilisation de la mémoire tampon a pour inconvénient de réduire inutilement la quantité d'informations transmises et, par conséquent, de réduire inutilement la qualité des images transmises. Le procédé de régulation doit donc éviter une stagnation du remplissage dans la zone des valeurs de 0% à 20%.

Le bourrage et la zone non-linéaire des graphes du paramètre constituent donc une première boucle de régulation qui a pour variable la valeur du remplissage R, mesurée à la fin du codage du bloc n°(j-1) précédent immédiatement le bloc courant n° j. Cette première boucle de régulation empêche le remplissage d'atteindre 0% ou 100% et l'empêche de stagner dans les zones 0 à 20% et 80% à 100%. Il est même possible de la stabiliser à une valeur à peu près constante, au prix de fréquents changements de la valeur instantanée du paramètre de régulation. Mais le but du procédé selon l'invention est d'éviter les changements fréquents de la valeur du paramètre de régulation, c'est pourquoi il est prévu une seconde boucle de régulation, agissant sur le choix de la valeur de palier pour chaque trame.

Elle agit au rythme des trames, ce qui est un rythme très inférieur à celui de la première boucle de régulation. La variable surveillée par cette seconde boucle de régulation n'est pas la valeur du remplissage réel, puisqu'à la fin de chaque trame le remplissage est revenu en général dans la zone 20 à 80%, grâce à la première boucle de régulation, parfois après de nombreux écarts dans les zones 0 à 20% et 80% à 100%. La variable de la seconde boucle est une valeur de remplissage virtuelle correspondant à un coût de codage virtuel de chaque trame, qui est égal au coût de codage que la trame précédente aurait si le premier niveau de régulation n'agissait pas, c'est-à-dire si la valeur du paramètre de régulation, pour chaque bloc de pixels de la trame précédente, avait une valeur constante égale à la valeur de palier calculée pour la trame précédente.

Le coût virtuel de la trame précédente est supérieur au coût réel si le point de fonctionnement a fait au moins un écart dans la partie exponentielle du graphe. Le coût virtuel de la trame précédente est inférieur au coût réel si le point de fonctionnement a fait au moins un écart dans la partie du graphe où un bourrage est déclenché. Le coût virtuel traduit à la fois le nombre et l'amplitude des écarts du point de fonctionnement hors de la zone de S1 à S2. Le coût de codage virtuel de l'image courante, pour la même valeur de palier, est supposé identique à celui de l'image précédente, et il est comparé à une valeur de consigne pour en déduire une valeur de palier convenant pour le codage de l'image courante. Cette valeur de consigne est une valeur de remplissage prédéterminée.

La détermination de la valeur de palier peut être réalisée selon deux variantes du procédé selon l'invention, correspondant à deux valeurs de consigne différentes. Selon la première variante, la seconde boucle de régulation tend à maintenir le remplissage dans la zone des valeurs 20% à 80%. Selon la seconde variante, la seconde boucle de régulation tend à maintenir le remplissage aux environs d'une valeur fixée M qui est égale à 50% de la capacité, par exemple. La première variante est à utiliser de préférence dans des applications où la suite de trames est quasi-stationnaire, alors que la seconde variante est à utiliser de préférence dans des applications où la suite de trames comporte fréquemment des changements de plan.

La première variante consiste à calculer, pour chaque trame courante, une valeur du palier telle que le coût de codage probable de la trame courante avec cette valeur de palier est égal à la quantité d'informations D extraite de la mémoire tampon pendant la durée de codage d'une trame, en supposant que la première boucle de régulation n'aura pas à intervenir. Cette première variante du procédé tend donc à laisser la mémoire tampon, dans le même état de remplissage à la fin du codage de la trame courante, qu'à la fin du codage de la trame précédente, si cet état de remplissage est dans la zone des valeurs jugées raisonnables : 20 à 80%.

L'estimation du coût de codage probable de la trame courante est faite à partir du coût de codage réel des blocs de la trame précédente, en supposant que ces deux images sont quasi-identiques. Si ce ce n'est pas le cas, la première boucle de régulation intervient : quand le remplissage sort de la zone 20% à 80%, il y est ramené, soit par un bourrage si sa valeur est inférieure à 20% ; soit par une augmentation des valeurs instantanées du paramètre de régulation, due à la partie croissante que comporte chacun des graphes GR1, ..., GR6, si la valeur de remplissage est supérieure à 80%.

Pour déterminer une valeur de palier, telle que le coût de codage probable de la trame courante soit égal à la valeur D fixée, il est nécessaire de trouver une relation entre ce coût probable et la valeur de palier qui procure ce coût de codage. Pour trouver cette relation, trois hypothèses sont faites :

1) la trame courante comportera pratiquement la même quantité d'informations que la trame précédente ;

2) pendant le codage de la trame courante, la régulation atteindra son régime permanent, le remplissage restera dans la zone 20% à 80%, autrement dit la valeur du paramètre restera constamment égale à la valeur de palier pour le codage de tous les blocs de pixels de la trame courante ;

3) le coût de codage de chaque bloc d'une trame est supposé inversement proportionnel à la valeur du paramètre de régulation utilisé pour le codage de ce bloc.

La deuxième hypothèse est supposée réalisée pour la trame courante, n° n, mais elle ne l'est pas pour la trame précédente, n°(n-1). Ceci conduit à définir un coût de codage virtuel CBv(n-1,j) pour chaque bloc n° j de la trame précédente. C'est le coût de codage qu'aurait ce bloc si la valeur du paramètre de régulation Par(R,n-1,j) utilisée pour son codage était égale à la valeur de palier Pal(n-1).

La troisième hypothèse permet de calculer de coût de codage virtuel CBv(n-1,j) par une extrapolation linéaire à partir :

- du coût de codage réel du bloc, CBr(n-1,j) qui est facile à mesurer ;
- de la valeur instantanée du paramètre, Par(R,n-1,j) qui est connue ;
- de la valeur BOU du bourrage éventuellement réalisé pendant le codage de ce bloc.

$$(1) \quad CBv(n-1,j) = \frac{Par(R,n-1,j)}{Pal(n-1)} \left[ CBr(n-1,j) - BOU \right]$$

Il est à remarquer que :
BOU = 0 si R est supérieur à 20%, car le bourrage n'est pas déclenche ; et Par(R,n-1,j) = Pal(n-1) si R est inférieur à 80%, car le point de fonctionnement est alors sur le palier d'un des graphes.

La première hypothèse permet de conclure que le bloc n° j de la trame courante n° n aurait un coût probable de codage égal au coût de codage virtuel CBv(n-1,j), du bloc homologue dans la trame précédente, si la valeur de palier Pal(n) utilisée pour coder la trame courante était égale à Pal(n-1) ; et permet de conclure que le coût de codage probable CP(n) de l'ensemble de la trame courante serait égal à la somme des coûts CBv(n-1,j) étendue à toute la trame précédente. Cette somme est dite coût de codage virtuelle, CV(n-1), de la trame précédente :

(2) $CP(n) = CV(n-1) = \sum_j CBv(n-1,j)$

La troisième hypothèse permet alors de calculer, par une extrapolation linéaire, la valeur de palier Pal(n) permettant d'obtenir un autre coût probable de codage, CP'(n), de la trame courante, égal à la valeur fixée D, en appliquant la formule suivante :

$$(3) \quad Pal(n) = Pal(n-1) \times \frac{CP(n)}{CP'(n)} = Pal(n-1) \times \frac{CV(n-1)}{D}$$

L'application des formules (1) à (3) fournit pour chaque trame une valeur de palier du graphe de régulation, telle que la valeur du remplissage est asservie à rester dans la zone 20% à 80%. La valeur de palier ne change, que si, pendant le codage de la trame précédente, le remplissage est sortie de la zone 20% à 80% pendant le codage d'au moins un bloc. Le remplissage peut fluctuer de manière importante dans cette zone de fonctionnement sans qu'il y ait de changement de valeur du palier, d'une trame à la suivante, par conséquent la suite de trames est restituée avec une qualité parfaitement uniforme dans le temps. C'est un avantage important car l'oeil est très sensible au bruit temporel dans les images.

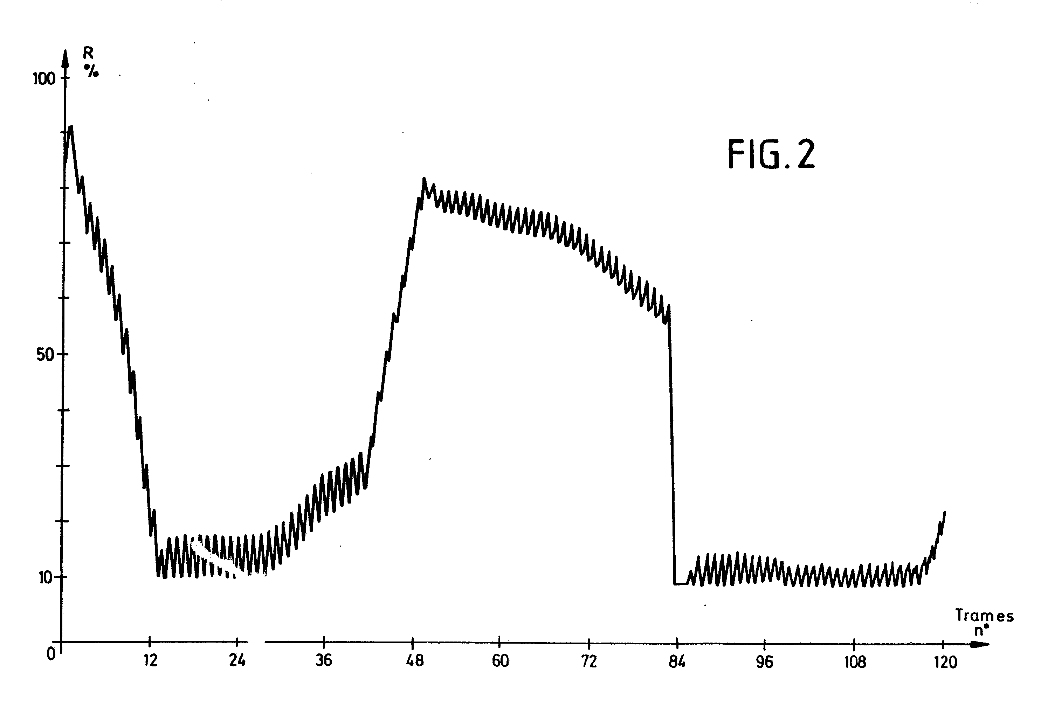

La figure 2 représente le graphe de la valeur du remplissage R, exprimée en pourcentage de la capacité de la mémoire tampon, en fonction du temps, celui-ci étant exprimé en nombre de trames. La suite de trames considérée comporte 120 trames, quasi-stationnaires de la trame n° 1 à la trame n° 42, puis quasi-stationnaires de la trame 43 à la trame 83, puis quasi-stationnaires de la trame n° 84 à la trame n° 120, les trames 43 et 84 correspondant à des changements de plan modifiant profondément les informations contenues dans la suite de trames.

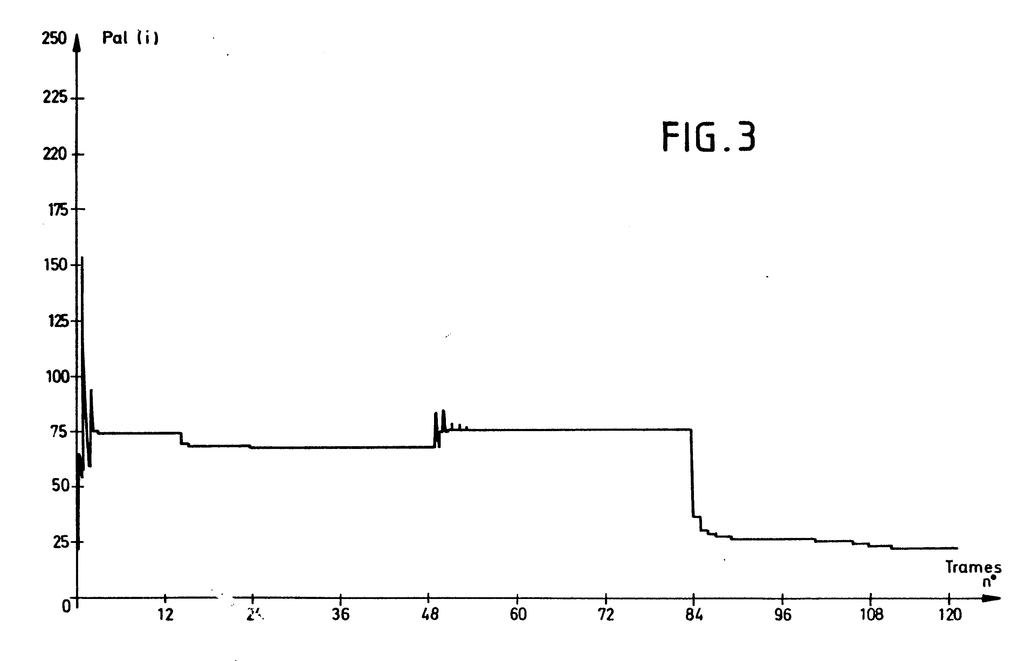

La figure 3 représente le graphe de la valeur de palier Pal(i) en fonction du temps représenté par le numéro, i, des trames. La suite de trames considérée est la même que pour la figure 2. Les figures 2 et 3 correspondent à la mise en oeuvre de la première variante du procédé selon l'invention. Sur la figure 2, il apparaît que le remplissage fluctue beaucoup entre 10% et 90% de la capacité de la mémoire tampon. Notamment, le remplissage décroit de 90% à 10% pendant les trames n° 1 à 12. La figure 3 montre que pendant les trames n° 1 à 12 la valeur de palier comporte quelques oscillations puis se stabilise à une valeur parfaitement constante et égale à 75. Pendant ce temps là, le remplissage décroît lentement. Aux environs de la trame n° 12, le remplissage descend en-dessous de 20%, ce qui déclenche un remplissage artificiel de la mémoire tampon par des bits de bourrage et provoque une modification de la valeur du palier du graphe du paramètre de régulation. Cette nouvelle valeur est égale à 71 de la trame n° 14 à la trame n° 23. Elle provoque une remontée du remplissage, par augmentation de la quantité d'informations utile.

Aux environs de la trame n° 24, le remplissage de la mémoire redevient supérieur à 20% et la valeur de palier se stabilise à une valeur parfaitement constante et égale à 70, jusqu'au changement de plan pour la trame n° 43, car le calcul de chaque valeur de palier donne toujours le même résultat tant que le remplissage reste dans la zone 20% à 80%.

Le remplissage atteint la valeur de 80% pour l'image n° 48, ce qui provoque alors une augmentation de la valeur de palier avec quelques oscillations. Cette augmentation de la valeur de palier provoque une décroissance du remplissage qui le ramène en-dessous de la valeur de seuil égale à 80%. La valeur de palier reste ensuite absolument constante et égale à 75, de la trame n° 55 à la trame n° 84 qui correspond à un changement de plan. Pendant ce temps, le remplissage de la mémoire diminue lentement en restant compris entre 80% et 20%.

La trame n° 84 provoque une baisse brutale du remplissage de la mémoire, aux environs de 10%. Le dispositif de régulation provoque alors une diminution brutale de la valeur de palier, suivie d'une diminution plus lente permettant de maintenir le remplissage à une valeur aux environs de 20%. Une remontée lente du remplissage le fait repasser au-dessus de la valeur de 20%, celle-ci étant atteinte aux environs de la trame n° 110. Ensuite la valeur de palier reste constante et égale à 20.

En conclusion, il apparaît sur la figure 2 de très fortes variations du remplissage de la mémoire tampon pendant les intervalles de temps où le calcul de chaque nouvelle valeur de palier donne un résultat constant. Il apparaît sur la figure 3 de longues périodes où la valeur de palier du graphe du paramètre de régulation est absolument constante ce qui permet d'obtenir une qualité de restitution parfaitement constante pendant ces périodes.

Par contre, la valeur du palier pourrait subir un saut d'amplitude très importante si un changement de plan survenait au moment où le remplissage dérive vers 80%. Ce saut pourrait nuire à la qualité des trames restituées. Comme mentionné précédemment, cette première variante du procédé de régulation convient donc mieux pour des applications où la suite de trames est quasi-stationnaire.

Une seconde variante du procédé selon l'invention est plus particulièrement adaptée à une suite de trames comportant de nombreux changements de plans. Selon cette variante, la valeur de palier calculée pour chaque trame est telle que le remplissage à la fin du codage de cette trame devrait être aux environs d'une valeur prédéterminée, M, fixée par exemple à 50%, au lieu de la zone S1 à S2 s'étendant de 20% à 80%.. Cette valeur est jugée raisonnable pour permettre une augmentation ou à une diminution imprévisible de la quantité d'informations contenue dans l'image courante sans augmenter fortement la valeur du paramètre, ni utiliser le bourrage. Cette stabilisation plus rigoureuse du remplissage de la mémoire tampon est faite au prix de modifications plus fréquentes de la valeur de palier du graphe du paramètre de régulation. Le raisonnement est analogue à celui tenu précédemment, mais la valeur de consigne pour le coût de codage n'est plus systématiquement égale à la valeur D de la quantité d'informations extraite de la mémoire pendant la durée du codage de chaque image. La valeur de consigne varie en fonction de la valeur du remplissage résiduel à la fin du codage de la trame précédente. Le coût de codage visé est égal à une valeur $D-\frac{C}{2}$-OCC(n-1), où C est la capacité de la mémoire, et où OCC(n-1) est le remplissage résiduel au début du codage de la trame n° n. La valeur de palier est calculée pour la trame courante n° n selon la formule suivante :

$$Pal(n) = Pal(n-1) \times \frac{Cv(n-1)}{D+\frac{C}{2} - OCC(n-1)} \qquad (4)$$

La valeur de palier calculée selon cette formule correspond à un asservissement du remplissage à la valeur 50%. Quand le remplissage est supérieur à 50% à la fin du codage de l'image précédente, n°(n-1), le terme $\frac{C}{2}$-OCC(n-1) est négatif, il provoque une augmentation de la valeur de palier Pal(n) et donc du pas de quantification pour réduire la quantité d'informations représentant l'image courante n° n. Au contraire, lorsque le remplissage est inférieur à 50%, à la fin du codage de l'image précédente, le terme $\frac{C}{2}$-OCC(n-1) est positif, il provoque une diminution de la valeur de palier Pal(n) et donc du pas de quantification, pour augmenter la quantité d'informations représentant l'image courante n° n.

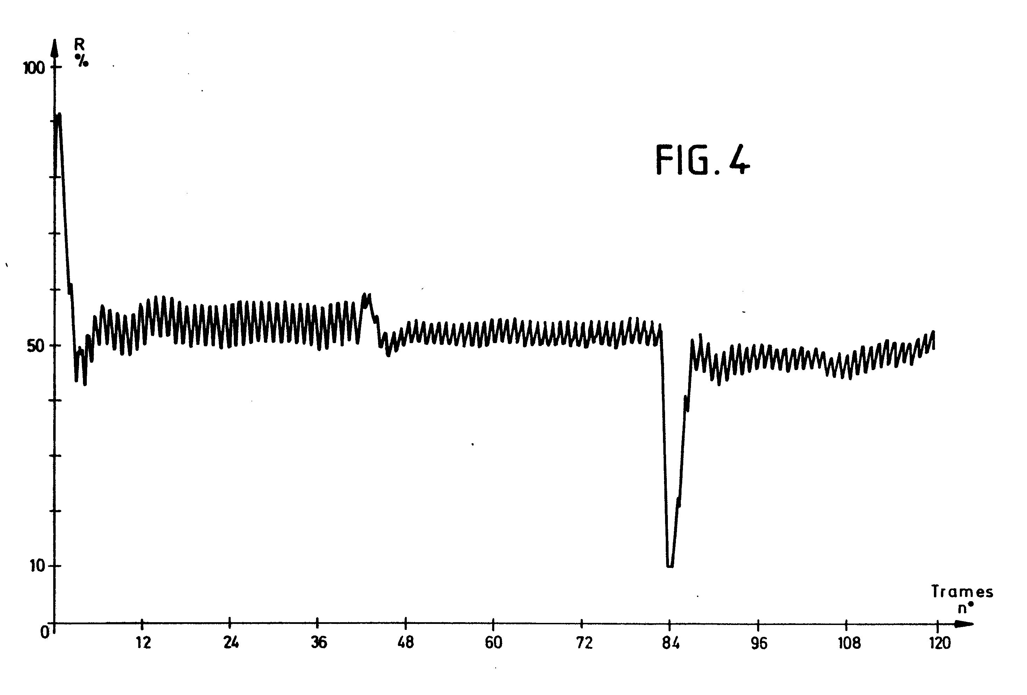

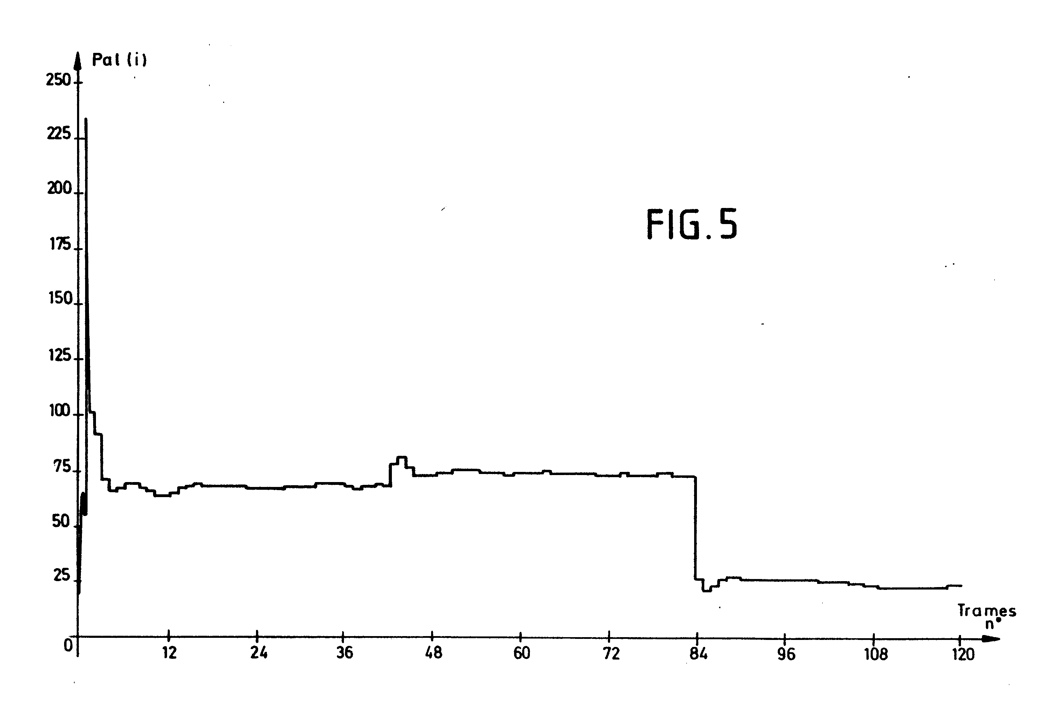

La figure 4 représente le graphe du remplissage de la mémoire tampon, en fonction du temps, pour la même suite de 120 trames que celle considérée pour les figures 2 et 3. La figure 5 représente le graphe, en fonction du temps, de la valeur du palier Pal(i) pour cette même suite de trames. Sur la figure 4, il apparaît, qu'après quelques trames, le remplissage de la mémoire tampon se stabilise aux environs de 55%. Il diminue un peu aux environs de la trame n° 44 correspondant au premier changement de plan et puis reste sensiblement égal à 50% jusqu'à la trame n° 83. Le changement de plan de la trame n° 83 provoque une baisse brutale du remplissage jusqu'à la valeur de 10%. Un bourrage est mis en oeuvre pour éviter un assèchement de la mémoire, et, simultanément, la valeur de palier du paramètre de régulation est fortement réduite. La seconde boucle de régulation réagit rapidement pour ramener le remplissage aux environs de 50% de la capacité de la mémoire, après quelques trames.

Sur la figure 5, il apparaît que, en dehors des périodes transitoires dues aux changements de plan, la valeur du palier est à peu près constante mais fluctue un peu, de 1 à 2 unités, ces fluctuations étant nécessaires pour maintenir le remplissage aux environs de la valeur 50% au lieu de le laisser dériver dans la zone de 20 à 80%. Pendant le codage des trames n° 4 à n° 42, la valeur de palier est égale à $70 \pm 2$. Pendant le codage des trames n° 48 à 83, la valeur de palier est égale à $75 \pm 2$. Pendant le codage des trames n° 90 à 120, la valeur de palier est égale à $25 \pm 2$. Ces fluctuations de la valeur de palier, d'une trame à une autre, sont peu gênantes pour la qualité des trames restituées, car elles sont d'une amplitude très faible.

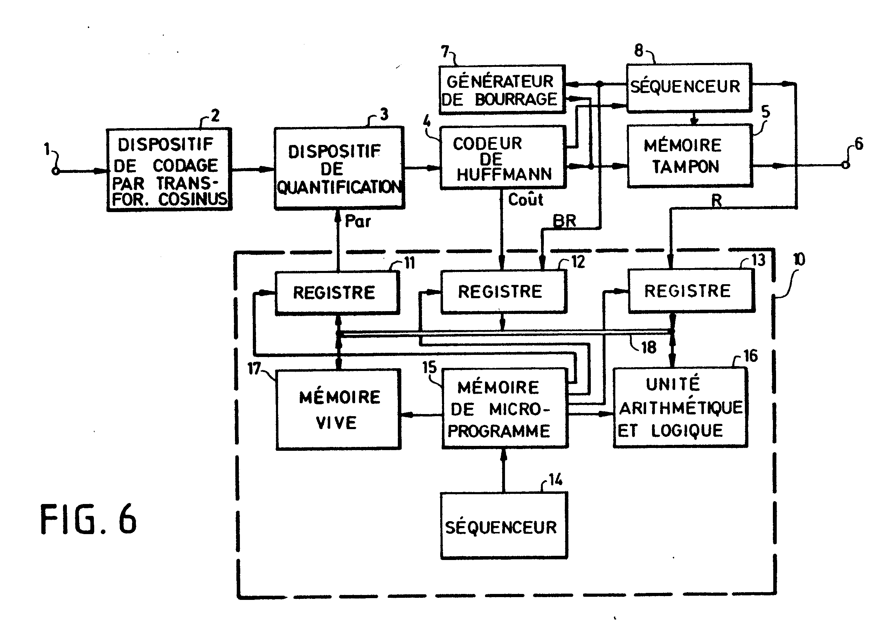

La figure 6 représente le schéma synoptique d'un exemple de réalisation d'un codeur d'images par transformation cosinus, comportant un dispositif de régulation, pour la mise en oeuvre du procédé selon l'invention. Ce codeur comporte : une borne d'entrée 1 recevant une suite de valeurs de luminance représentant une suite d'images de télévision ; un dispositif 2 de codage par transformation cosinus, par blocs de 16x16 pixels ; un dispositif de quantification, 3 ; un codeur de Huffmann, 4 ; une mémoire tampon 5 ; un générateur de bourrage 7 ; un séquenceur 8 ; une borne de sortie 6 ; et un dispositif 10 de régulation du remplissage de la mémoire tampon.

Le dispositif 2 possède une entrée reliée à la borne d'entrée 1 pour recevoir les valeurs numériques à coder, et possède une sortie reliée à une entrée du dispositif de quantification 3. Le dispositif 3 possède une entrée de commande, reliée à une sortie du dispositif de régulation 10, et possède une sortie reliée à une entrée du codeur de Huffmann 4. Le codeur 4 possède une première sortie fournissant une valeur de coût à une première entrée du dispositif de régulation 10, une deuxième sortie reliée à une entrée de données de la mémoire tampon 5, et une troisième sortie fournissant un signal de validation à une entrée du séquenceur 8.

Le générateur de bourrage 7 possède une entrée reliée à une sortie du séquenceur 8 pour commander la fourniture d'un mot de bourrage qui a une forme spécifique et qui est constitué de 16 bits en série. Le générateur 7 possède une sortie reliée à l'entrée de données de la mémoire tampon 5 pour lui fournir ce mot de bourrage, sous la forme série. Le sequenceur 8 possède une deuxième sortie reliée à une entrée de commande de la mémoire tampon 5 pour commander les opérations de lecture et d'écriture dans cette mémoire ; et possède une troisième sortie reliée à une deuxième entrée du dispositif 10 pour lui fournir la valeur R du remplissage de la mémoire tampon 5. Une troisième entrée du dispositif 10 est reliée à la première sortie du séquenceur 8.

Les dispositifs 2 et 3 sont de réalisation classique. L'entrée de commande du dispositif 3 reçoit une valeur de paramètre de régulation, Par, qui définit l'échelle de quantification. Par exemple, cette échelle de quantification est linéaire et a un pas de valeur égale à la valeur du paramètre Par. Le dispositif de quantification 3 divise la valeur numérique appliquée à son entrée par la valeur du pas de quantification ; arrondit le résultat à la valeur entière la plus proche ; puis fournit ce résultat sur sa sortie.

Dans une variante de réalisation où la quantification à réaliser n'est pas selon une échelle linéaire, le dispositif 3 peut être constitué d'un dispositif de quantification linéaire dont le pas uniforme est égal à la valeur du paramètre de régulation, suivi d'une mémoire morte de transcodage ayant une fonction de transfert non linéaire.

Pour chaque valeur numérique appliquée à son entrée, le codeur 4 fournit à la mémoire tampon 5 un mot de code sous forme série ; il fournit au dispositif 10 une valeur de coût de codage correspondant à ce mot de code ; et il fournit au séquenceur 8 un signal de validation pour chacun des bits du mot de code, ce signal de validation permettant au séquenceur 8 de commander l'inscription de ce bit dans la mémoire tampon 5.

Le générateur de bourrage 7 fournit un mot de bourrage de 16 bits prédéterminé, sous forme série, à la mémoire tampon 5, lorsqu'il reçoit un signal de commande BR fourni par le séquenceur 8. Le signal BR est fourni aussi à la troisième entrée du dispositif 10 pour informer celui-ci d'une opération de bourrage. Le séquenceur 8 commande l'écriture de bits de données au rythme où ils sont disponibles à la sortie du codeur 4, et il commande la lecture des données stockées dans la mémoire 5, au rythme du canal de transmission. Le séquenceur 8 comporte un compteur de remplissage qui compte le nombre des bits inscrits dans la mémoire 5 et qui décompte le nombre de bits lus dans la mémoire 5. Le contenu du compteur est donc la valeur R du remplissage de la mémoire 5. Le séquenceur 8 comporte en outre un comparateur qui fournit le signal de commande de bourrage, BR, lorsque le contenu R du compteur est inférieur à 20% de la capacité de la mémoire 5, au début du codage d'un bloc. Chaque fois que le signal de bourrage BR est envoyé au générateur 7 celui-ci fournit un mot de bourrage constitué de 16 bits prédéterminés et le compteur de remplissage est incrémenté de 16 unités.

Une sortie de données de la mémoire tampon 5 est reliée à la borne de sortie 6 du codeur pour lui fournir sous forme série les mots de code de Huffmann qui ont été stockés dans la mémoire tampon. Ces mots de code, ainsi que les mots de bourrage, sont restitués sous la commande du séquenceur 8, dans l'ordre où ils ont été stockés dans la mémoire 5. Le codeur de Huffmann 4, le générateur de bourrage 7, le séquenceur 8, et la mémoire tampon 5 sont de réalisation classique.

Le dispositif 10 de régulation de remplissage de la mémoire tampon comporte : trois registres 11, 12, 13 ; un séquenceur 14 ; une mémoire de micro-programmes, 15 ; une unité arithmétique et logique, 16 ; et une mémoire vive 17.

Le registre 11 possède une sortie reliée à la sortie du dispositif 10. Le registre 12 possède deux entrées reliées respectivement à la première et à la troisième entrée du dispositif 10, pour recevoir respectivement un mot binaire représentant le coût de codage et un bit constitué par la valeur du signal BR. Le registre 13 possède une entrée constituant la deuxième entrée du dispositif 10, pour recevoir le mot binaire représentant le remplissage, R. Les registres 11, 12 et 13 ont chacun une en trée de commande, reliée respectivement à une sortie de la mémoire de micro-programmes 15.

Les registres 12 et 13 ont chacun une sortie reliée à un bus bidirectionnel 18. Le registre 11 possède une entrée reliée au bus 18. Le bus 18 est relié à une entrée-sortie de l'unité arithmétique et logique 16, et à une entrée-sortie de la mémoire vive 17. L'unité arithmétique et logique 16 possède une entrée de commande reliée à une sortie de la mémoire 15. La mémoire 17 constitue une mémoire de calcul et est commandée par une sortie de la mémoire 15. Les sorties de la mémoire 15 fournissent des signaux de commande aux différents éléments constituant le dispositif 10, sous la commande d'une suite d'adresses que le séquenceur 14 fournit à une entrée d'adresses de la mémoire 15.

La mémoire de micro-programme, 15, stocke une suite de mots binaires qui constitue les signaux de commande des éléments du dispositif 10, pour réaliser une régulation du remplissage de la mémoire tampon 5, conformément à la première variante du procédé décrit précédemment. Pendant le codage de l'image n°(n-1), le dispositif 10 détermine la valeur de palier Pal(n) du graphe du paramètre de régulation qui sera utilisé pour le codage de l'image n° n. Puis, pendant le codage de l'image n° n, le dispositif 10 détermine une valeur de paramètre Par pour le codage de chaque bloc de 16x16 pixels. Si le remplissage R de la mémoire tampon au début du codage d'un bloc est inférieur à 80% de la capacité de la mémoire 5, le dispositif 10 fournit une valeur de paramètre Par égale à la valeur de palier Pal(n). Par contre, si, au début du codage d'un bloc, la valeur de remplissage est supérieure à 80%, le dispositif 10 calcule une valeur de paramètre Par qui est égale à la somme de la valeur de palier Pal(n) plus la valeur d'une fonction exponentielle prédéterminée ayant pour variable le remplissage R.

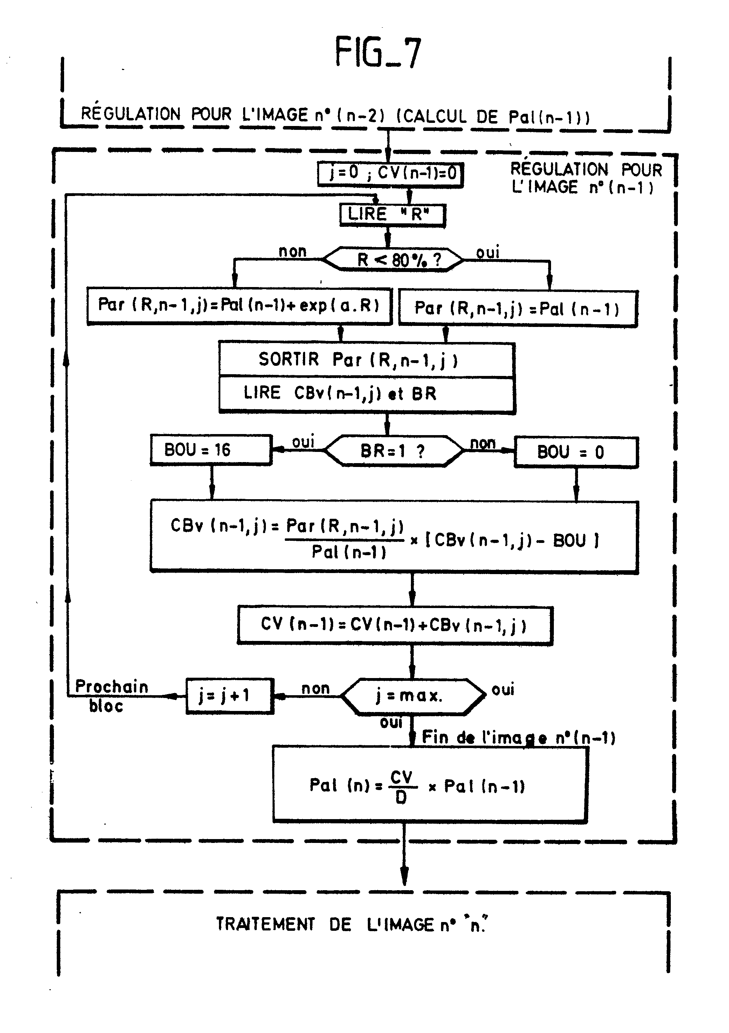

La figure 7 représente l'organigramme de la séquence des opérations commandées par le micro-programme pour calculer la valeur de palier Pal(n) pour l'image courante n° n, conformément aux formules (1) à (3), pendant le codage de l'image précé dente, n°(n-1). Cet organigramme est exécuté pendant le codage de l'image n°(n-1), ce qui suppose que la valeur de palier Pal(n-1) a été calculée précédemment en fonction des caractéristiques de l'image précédente, n°(n-2). La séquence des opérations commence par une initialisation à zéro du numéro de bloc j et du coût virtuel de codage de l'image n°(n-1) : CV(n-1). Pour chaque bloc n° j une première opération consiste à lire la valeur du remplissage R dans le registre 13.

La valeur R est comparée par rapport à la valeur de seuil : 80% de la capacité de la mémoire tampon 5. Si elle est inférieure à cette valeur de seuil, la valeur du paramètre Par(R,n-1,j) pour le bloc, est prise égale à la valeur de palier Pal(n-1) qui a été calculée pendant le codage de l'image n°(n-2) et qui est disponible dans la mémoire vive 17. Si la valeur R est supérieure à 80% de la capacité de la mémoire tampon 5, la valeur du paramètre Par(R,n-1,j) est calculée en additionnant la valeur de palier connue, Pal(n-1), avec une valeur exp a.R qui est une fonction exponentielle du remplissage R dans laquelle a est un coefficient fixé.

Dans les deux cas, la séquence des opérations consiste ensuite à : sortir la valeur du paramètre de régulation Par(R,n-1,j), par l'intermédiaire du registre 11 ; puis lire la valeur du coût de codage réel du bloc n° j, CBr((n-1),j), et la valeur du signal de commande de bourrage BR, dans le registre 12. La valeur du signal BR est testée pour savoir s'il y a réalisation d'un bourrage ou non, pendant le codage du bloc n° j. S'il n'y a pas de bourrage, le coût du bourrage, BOU, est nul. S'il y a bourrage, le coût du bourrage, BOU, prend la valeur 16.

Dans les deux cas, le coût virtuel de codage du bloc, CBv(n-1,j) est calculé ensuite selon la formule (1). Puis le coût de codage virtuel du bloc est additionné à la valeur du coût de codage virtuel de l'image, CV(n-1).

Puis la valeur du numéro de bloc, j, est comparée à la valeur maximale des numéros de blocs dans une image, max. Si le bloc considéré est le dernier de l'image, le traitement de l'image n°(n-1) se termine par un calcul de la valeur Pal(n) selon la formule (3), cette valeur de palier étant celle du graphe du paramètre de régulation à utiliser pour l'image suivante, l'image n° n. Si le bloc n° j n'est pas le dernier bloc de l'image considérée, l'opération suivante consiste à incrémenter le n° j puis à recommencer les opérations précédentes à partir de la lecture de la valeur de remplissage R.

La réalisation du micro-programme contenu dans la mémoire 15 pour commander l'unité arithmétique et logique 16, en fonction de cet organigramme, est à la portée de l'homme de l'art.

La réalisation d'un dispositif de régulation mettant en oeuvre la seconde variante du procédé selon l'invention est peu différente de celle décrite ci-dessus. Le micro-programme est légèrement différent car la formule (3) est remplacée par la formule (4). Le micro-programme comporte alors une étape supplémentaire, pour calculer $D + \frac{C}{2}$ - OCC(n-1). La première valeur du remplissage R est stockée dans la mémoire vive 17, car elle constitue la valeur OCC(n-1) du remplissage résiduel.

L'invention ne se limite pas aux exemples de mise en oeuvre décrits ci-dessus, et elle peut être appliquée dans des dispositifs de codage utilisant d'autres procédés que la transformation cosinus, l'essentiel étant qu'il comporte un dispositif de quantification, linéaire ou non linéaire, dont le pas soit commandable en lui fournissant un paramètre de régulation.

La réalisation d'un décodeur d'images pour décoder les données fournies par un tel codeur, est à la portée de l'homme de l'art. En effet, il est classique de réaliser un décodeur d'images comportant une mémoire tampon et comportant un dispositif de quantification inverse commandé par un paramètre de quantification égal à l'inverse de celui utilisé pour le codage, la valeur de ce paramètre étant calculé en fonction du remplissage de la mémoire tampon. Lorsque le procédé selon l'invention est appliqué, le paramètre de régulation utilisé dans le décodeur comporte lui aussi une famille de graphes correspondant à une pluralité de valeurs de palier. Pour que le décodeur d'images détermine une valeur exacte du paramètre de quantification inverse, il suffit de transmettre, avec les données codées de chaque image, un mot binaire identifiant le graphe utilisé, ce mot binaire pouvant être constitué tout simplement par la valeur de palier.

**Revendications**

1. Procédé de régulation du remplissage de la mémoire tampon d'un codeur d'images, les images étant représentées par une suite de valeurs numériques, qui sont quantifiées selon une échelle de quantification, puis sont codées par blocs selon un procédé connu ; consistant à définir l'échelle de quantification par un paramètre (Par(R,n,j)) dit paramètre de régulation, chaque pas de l'échelle de quantification croissant avec ce paramètre ; à déterminer une valeur de paramètre en fonction du remplissage (R) de la mémoire tampon, en cours du codage de l'image courante ; et à stocker dans la mémoire tampon des bits de bourrage lorsque la valeur du remplissage (R) est inférieure à une première valeur de seuil (S1) ;
caractérisé en ce qu'il consiste, en outre, à :
- déterminer, pour toute la durée de chaque image courante (n° n), une valeur (Pal(n)), dite valeur de palier, définissant un graphe (GR1, ..., ou GR6) du paramètre de régulation (Par(R,n,j) en fonction du remplissage (R), ce graphe comportant un palier où le paramètre est égal à la valeur de palier (Pal1, ...,

Pal6) pour toutes les valeurs de remplissage (R) inférieures à une seconde valeur de seuil (S2) qui est supérieure à la première valeur de seuil (S1), et comportant une partie où le paramètre est croissant pour les valeurs de remplissage croissant au delà de la seconde valeur de seuil (S2) ; cette valeur de palier étant déterminée en fonction de la valeur de palier qui a été calculée pour l'image précédente, et en fonction du coût de codage de chacun des blocs de valeurs représentant l'image précédente ;
- déterminer une valeur du paramètre pour chaque bloc de valeurs représentant l'image courante, telle que cette valeur appartienne au graphe (GR1, ..., ou GR6) déterminé pour l'image courante, et corresponde à la valeur du remplissage (R) à la fin du codage du codage du bloc immédiatement précédent.

2. Procédé selon la revendication 1, caractérisé en ce que, pour déterminer une valeur de palier pour chaque image courante, il consiste à déterminer une valeur de palier (Pal1, ..., ou Pal6) telle que la valeur (R) du remplissage, estimée pour l'image courante, reste comprise entre la première et la seconde valeur de seuil (S1, S2), pendant toute la durée du codage de l'image courante.

3. Procédé selon la revendication 1, caractérisé en ce que, pour déterminer une valeur de palier pour chaque image courante, il consiste à déterminer une valeur de palier (Pal1, ..., ou Pal6) telle que la valeur (R) du remplissage, estimée pour l'image courante, reste aux environs d'une valeur fixée (M), pendant toute la durée du codage de l'image courante.

4. Procédé selon la revendication 2, caractérisé en ce que pour déterminer une valeur de palier, pour chaque image courante, il consiste à :
- estimer un coût de codage virtuel de l'image précédente, qui serait le coût du codage de l'image précédente dans l'hypothèse où tous les blocs de cette image précédente seraient codés avec un paramètre de régulation constant et égal à la valeur de palier du graphe du paramètre de régulation utilisé pour coder l'image précédente, en admettant que le coût de codage de chaque bloc est inversement proportionnel à la valeur du paramètre de régulation utilisée pour ce bloc ;
- prendre pour valeur de palier, pour le graphe du paramètre de régulation utilisé pour coder l'image courante, le produit de la valeur du palier du graphe utilisé pour coder l'image précédente, par le rapport du coût de codage virtuel de l'image précédente, sur la quantité d'informations qui est extraite de la mémoire tampon pendant la durée du codage de chaque image.

5. Procédé selon la revendication 3, caractérisé en ce que, pour déterminer la valeur de palier du graphe du paramètre de régulation utilisé pour coder l'image courante, il consiste à :
- estimer un coût de codage virtuel de l'image précédente, qui serait le coût du codage de l'image précédente dans l'hypothèse où tous les blocs de cette image précédente seraient codés avec un paramètre de régulation constant et égal à la valeur de palier du graphe du paramètre de régulation utilisé pour coder l'image précédente, en admettant que le coût de codage de chaque bloc est inversement proportionnel à la valeur du paramètre de régulation utilisée pour ce bloc ;
- prendre pour valeur de palier (Pal(n)), pour le graphe du paramètre de régulation utilisé pour coder l'image courante, le produit de la valeur du palier du graphe utilisé pour coder l'image précédente, par le rapport du coût virtuel de l'image précédente, sur la quantité d'informations qui peut être inscrite dans la mémoire tampon pendant la durée du codage de l'image courante, compte tenu : de la quantité d'informations extraite de la mémoire pendant cette durée ; de la quantité d'informations résiduelle dans la mémoire au début du codage de l'image courante ; et d'une réserve de capacité pour une variation éventuelle et imprévisible, du coût de codage réel de l'image courante.

6. Dispositif de régulation du remplissage de la mémoire tampon d'un codeur d'images, pour la mise en oeuvre du procédé selon la revendication 1, le codeur comportant :
- des moyens (3) pour quantifier une suite de valeurs numériques représentant une suite d'images, selon une échelle de quantification définie par la valeur d'un paramètre de régulation (Par), ce paramètre étant constant pour un bloc de valeurs représentant un bloc de pixels ;
- des moyens (4) pour coder les valeurs quantifiées ;
- une mémoire tampon (5) pour stocker les valeurs codées ;
- des moyens (7, 8) pour mesurer le remplissage (R) de la mémoire (5) et pour y stocker des bits de bourrage lorsque le remplissage (R) est inférieur à une première valeur de seuil fixée (S1) ;
caractérisé en ce que le dispositif de régulation (10) comporte des moyens de calcul programmable (11 à 17) programmés pour :
- calculer, pour chaque image courante, une valeur dite valeur de palier, en fonction de la valeur de palier calculée pour l'image précédente et en fonction du coût de codage de chacun des blocs de valeurs représentant l'image précédente ;
- calculer, pour chaque bloc de valeurs représentant l'image courante, une valeur du paramètre de régulation (Par) en fonction de la valeur du remplissage (R) à la fin du codage du bloc immédiatement précédent, cette fonction ayant une valeur constante égale à la valeur de palier, pour toutes les valeurs de remplissage (R) inférieures à une seconde valeur de seuil (S2) qui est supérieure à la première valeur de seuil (S1), et ayant une valeur croissante pour les valeurs de remplissage (R) supérieures à la seconde valeur de seuil (S2).

7. Dispositif selon la revendication 6, caractérisé en ce que, pour calculer la valeur de palier pour l'image courante, les moyens de calcul programmables (11, 17) sont programmés pour :
- calculer un coût de codage, dit coût de codage virtuel, pour chaque bloc de valeurs représentant l'image précédente, qui est égal au coût de codage réel de ce bloc, moins le coût du bourrage éventuel, multiplié par la valeur de paramètre effectivement utilisé, sur la valeur de palier déterminée pour l'image précédente ;
- calculer un coût de codage virtuel de l'image précédente, en additionnant les coûts de codage virtuels de tous les blocs de valeurs représentant l'image précédente ;
- calculer une valeur de palier, pour l'image courante, proportionnel au coût de codage virtuel calculé pour l'image précédente.

FIG.1
Par (R,n,j)
Paramètre
de
Régulation
S1
M
S2
GR1
PAL 1
PAL 6
GR6
R
Remplissage
%
10
20
30
40
50
60
70
80
90
100

FIG.2
R
%
100
50
10
0
12
24
36
48
60
72
84
96
108
120
Trames
n°

Pal (i)
250
225
220
175
150
125
100
75
50
25
0
12
36
48
60
72
84
96
108
120
Trames n°

FIG. 3

R
%
100
50
10
0
12
24
36
48
60
72
84
96
108
120
Trames
n°

FIG. 4

FIG. 5
Pal (i)
250
225
200
175
150
125
100
75
50
25
0
12
24
36
48
60
72
84
96
108
120
Trames n°

1
2
DISPOSITIF DE CODAGE PAR TRANS-FOR. COSINUS
3
DISPOSITIF DE QUANTIFICATON
Par
4
CODEUR DE HUFFMANN
Coût
7
GÉNÉRATEUR DE BOURRAGE
8
SÉQUENCEUR
5
MÉMOIRE TAMPON
6
R
BR
10
11
REGISTRE
12
REGISTRE
13
REGISTRE
18
16
UNITÉ ARITHMÉTIQUE ET LOGIQUE
15
MÉMOIRE DE MICRO-PROGRAMME
14
SÉQUENCEUR
17
MÉMOIRE VIVE


FIG. 6

FIG_7
RÉGULATION POUR L'IMAGE n° (n-2) (CALCUL DE Pal(n-1))
RÉGULATION POUR L'IMAGE n° (n-1)
j=0 ; CV(n-1)=0
LIRE "R"
R < 80% ?
non
oui
Par (R,n-1,j)=Pal (n-1)+ exp (a.R)
Par (R,n-1,j) =Pal (n-1)
SORTIR Par (R,n-1,j)
LIRE CBv(n-1,j) et BR
BOU = 16
oui
BR=1 ?
non
BOU = 0
CBv (n-1,j) = Par (R,n-1,j) / Pal (n-1) × [CBv (n-1,j) - BOU]
CV (n-1) = CV(n-1) + CBv (n-1,j)
Prochain bloc
j=j+1
non
j = max.
oui
oui
Fin de l'image n°(n-1)
Pal (n) = CV / D × Pal (n-1)
TRAITEMENT DE L'IMAGE n° "n."

European Patent Office

# EUROPEAN SEARCH REPORT

Application Number

EP 89 40 1704

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 307 420 (NINOMIYA et al.)<br>* Colonne 20, ligne 17 - colonne 24, ligne 14 *<br>--- | 1,6 | H 04 N 7/137 |
| A | EP-A-0 246 701 (TELECOMMUNICATIONS RADIOELECTRIQUES ET TELEPHONIQUES)<br>* Colonne 2, ligne 31 - colonne 7, ligne 23 *<br>--- | 1,6 | |
| A | FUJITSU SCIENTIFIC & TECHNICAL JOURNAL, vol. 13, no. 4, décembre 1977, pages 21-52; O. TAKAHASHI et al.: "Interframe CODEC for NTSC color television signals"<br>* Page 34, ligne 3 - page 35, ligne 26; page 37, ligne 11- page 39, ligne 11; page 45, ligne 9 - page 48, ligne 13 *<br>--- | 1,6 | |
| A | FR-A-2 545 306 (THOMSON-CSF)<br>* Page 2, ligne 26 - page 7, ligne 17 *<br>--- | 1,6 | **TECHNICAL FIELDS SEARCHED (Int. Cl.4)** |
| A | IEEE TRANSACTIONS ON COMMUNICATIONS, vol. COM-35, no. 11, novembre 1987, pages 1171-1177, IEEE, New York, NY, US; D.R. WALKER et al.: "Motion-compensated coder"<br>* Page 1175, colonne de droite, lignes 29-61 *<br>--- | 1,6 | H 04 N |
| A | US-A-4 672 411 (SHIMIZU et al.)<br>--- | | |
| A | US-A-4 517 596 (SUZUKI)<br>--- | | |
| A | US-A-4 706 260 (FEDELE et al.)<br>----- | | |

The present search report has been drawn up for all claims

| Place of search | Date of completion of the search | Examiner |
|---|---|---|
| THE HAGUE | 08-09-1989 | VERSCHELDEN J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)